# EUROPEAN PATENT APPLICATION

(11) **EP 3 264 158 A1**
(43) Date of publication of application: **03.01.2018**
(21) Application number: 15893616.1
(22) Date of filing: 29.05.2015
(51) Int. Cl.: G02B 27/01

(54) **ADAPTIVE DISPLAY ADJUSTMENT METHOD AND HEAD-MOUNTED DISPLAY DEVICE**

(71) Applicant: Shenzhen Royole Technologies Co., Ltd., Shenzhen, Guangdong 518172 (CN)
(72) Inventor: ZHAO, Cong, Shenzhen Guangdong 518052 (CN); SUN, Jiasong, Shenzhen Guangdong 518052 (CN); LIU, Zihong, Shenzhen Guangdong 518052 (CN)
(74) Representative: Loo, Chi Ching
(86) International application number: PCT/CN2015/080327
(87) International publication number: WO 2016/191953

(57) **Abstract**

A method for adaptive display adjustment and a head-mounted display (HMD) device are provided. The HMD device includes: a storage unit that stores at least one adjustment record, each adjustment record containing at least one of a diopter adjustment parameter and an interpupillary distance (IPD) adjustment parameter; a display unit that includes two sets of display modules, each set of display module including a miniature display device and an optical module connected to the miniature display device; a retrieval unit that queries the storage unit for a corresponding adjustment record according to a query request, and retrieves adjustment parameters of the corresponding adjustment record; and an adjustment unit that generates a drive signal based on the retrieved adjustment parameters, and adjusts at least one of a distance between each miniature display device and its corresponding optical module and a distance between the two sets of display modules. The provided method for adaptive display adjustment and the HMD device enable the adaptive display adjustment of the HMD device, providing an intelligent adjustment mode that can adapt to different users' visions.

## Description

### TECHNICAL FIELD

This disclosure generally relates to display adjustment techniques, and more particularly relates to a method for adaptive display adjustment and a head-mounted display (HMD) device equipped with the method for adaptive display adjustment.

### BACKGROUND

A head-mounted display (HMD) device-also called video glasses, eyeglass display, portable theater—allows playback of multimedia files, including 3D (three dimensional) video. The HMD device uses near-eye display technology to enable immersive theater effects, moving the portable home theater concept into a commercially available product.

But each person may have different eyesight-some may have myopia, hyperopia, presbyopia or other eye conditions and so may not be able to experience the HMD device in an optimal manner. Accordingly, a manual adjustment mechanism is provided with the HMD device by which the user can manually adjust the diopter or interpupillary distance (IPD) to facilitate the display adjustment. The manual adjustment mechanism, however, is vulnerable to inadvertent operation or touch, which may cause changes in the adjustment. Also, if the HMD device has been worn by another user, it may also lead to an alteration of the adjustment. As such, when the user comes back to use the HMD device, repeated manual adjustments would be required, resulting in unsatisfactory experience of using the product.

In view of this, there is a need for an HMD device that can effectively solve the above problem to improve the ease of display adjustment of the product.

### SUMMARY

Embodiments of the disclosure provide a head-mounted display (HMD) device that includes a storage unit, a display unit, a retrieval unit, and an adjustment unit.

The storage unit is configured to store at least one adjustment record, each adjustment record containing a diopter adjustment parameter(s) and/or an interpupillary distance (IPD) adjustment parameter(s).

The display unit includes two sets of display modules, each set of display module including a miniature display device and an optical module connected to the miniature display device.

The retrieval unit is configured to query the storage unit for a corresponding adjustment record according to a query request, and retrieve adjustment parameters of the corresponding adjustment record.

The adjustment unit is configured to generate a drive signal based on the retrieved adjustment parameters of the corresponding adjustment record, and adjust, in accordance with the drive signal, a distance between each miniature display device and its corresponding optical module and/or a distance between the two sets of display modules.

A method for adaptive display adjustment is also provided. The method is applicable to an electronic device having two sets of display modules, with each set of display module including a miniature display device and an optical module connected to the miniature display device.

The method includes: querying for a corresponding adjustment record according to a query request, and retrieving corresponding adjustment parameters of the corresponding adjustment record, where the adjustment record may contain a diopter adjustment parameter(s) and/or an interpupillary distance (IPD) adjustment parameter(s); generating a drive signal based on the retrieved adjustment parameters, and adjusting, in accordance with the drive signal, a distance between each miniature display device and its corresponding optical module and/or a distance between the two sets of display modules.

According to the head-mounted display device and the method for adaptive display adjustment that are provided by various embodiments disclosed herein, adjustment parameters corresponding to diopter and/or IPD can be acquired from an adjustment record, so that the distance between each miniature display device and its corresponding optical module and/or the distance between the two sets of display modules can be automatically adjusted, enabling adaptive display adjustment of the HMD device. Thus an intelligent adjustment mode that can adapt to different users' visions can be provided.

### BRIEF DESCRIPTION OF THE ACCOMPANYING DRAWINGS

The following drawings are intended to illustrate various embodiments of the disclosure in connection with specific embodiments. It is to be appreciated that various elements shown in these drawings are not representative of their actual sizes and are not to scale, but are merely schematics intended for illustrative purposes. Therefore, they should not be construed as limiting of the disclosure.
FIG. 1 is a block diagram illustrating a head-mounted display device provided in a first embodiment of the disclosure.
FIG. 2 is a block diagram illustrating a head-mounted display device provided in a second embodiment of the disclosure.
FIG. 3 is a block diagram illustrating a head-mounted display device provided in a third embodiment of the disclosure.
FIG. 4 is a flowchart illustrating a method for adaptive display adjustment provided in a fourth embodiment of the disclosure.
FIG. 5 is a flowchart illustrating a method for adaptive display adjustment provided in a fifth embodiment of the disclosure.
FIG. 6 is a flowchart illustrating a method for adaptive display adjustment provided in a sixth embodiment of the disclosure.

### DETAILED DESCRIPTION OF ILLUSTRATED EMBODIMENTS

To provide a better understanding of the objects, technical solutions and advantages of the disclosure, herein below the present disclosure will be described in further detail with reference to various embodiments and the accompanying drawings. It will be appreciated that the specific embodiments described herein are merely illustrative of and are not intended to limit the disclosure.

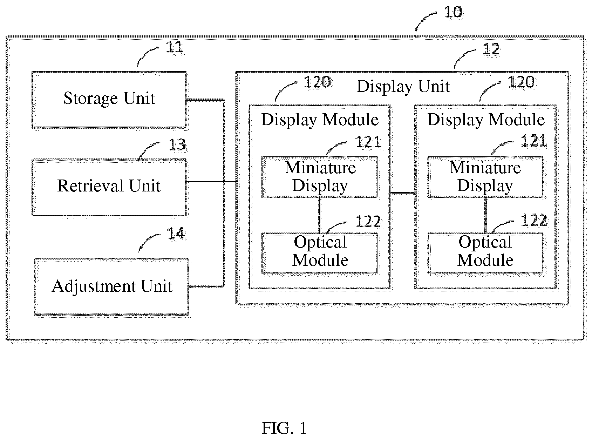

FIG. 1 is a block diagram illustrating a head-mounted display (HMD) device in accordance with a first embodiment of the disclosure. Head-mounted display device 10 includes a storage unit 11, a display unit 12, a retrieval unit 13, and an adjustment unit 14.

The storage unit 11 is configured to store at least one adjustment record. Each adjustment record may include one or more adjustment parameters corresponding to diopter and/or interpupillary distance (IPD), diopter adjustment parameter and/or IPD adjustment parameter for short.

In particular, the adjustment record may flexibly provide adjustment of the diopter and/or adjustment of the IPD, depending on the specific mechanism of the head-mounted display device 10. That is, head-mounted display device 10 may provide only the diopter adjustment, only the IPD adjustment, or both. Accordingly, the adjustment record may contain diopter adjustment parameters, or IPD adjustment parameters, or both.

The adjustment record may be fixed records that have been stored beforehand. For example, the adjustment record may contain adjustment parameters corresponding to different diopters and/or IPDs, such that a user can select from the adjustment records the one that has the diopter and/or IPD corresponding to the user's own diopter and/or IPD. As such, the adjustment unit 14 can automatically adjust the display unit 12 based on the adjustment parameters corresponding to the diopter and/or IPD contained in the selected adjustment record, thereby providing the user with the desired optimal display effects.

The user can select the desired adjustment record in the following manners: the head-mounted display device 10 may output and display all the adjustment records for the user to manipulate and select, or the user can directly enter a diopter and/or IPD on his/her own.

Alternatively or additionally, the adjustment record may be expandable records that are established in a dynamic manner. For example, the above selection manners may be utilized or the head-mounted display device may automatically detect the diopter and/or IPD of a user currently wearing the head-mounted display device, so as to establish an adjustment record corresponding to the user. The associated adjustment record can then be stored to the storage unit 11, so that when the user is to use the head-mounted display device, the user can be automatically matched and the corresponding adjustment record can be retrieved for automatic display adjustment, thereby enabling automatic adaptation among different users of the same head-mounted display device, eliminating the need for repeated operations or settings each time a user uses the head-mounted display device.

Typically, the storage unit is not limited to the physical storage of the head-mounted display device, and may also be a cloud storage built over a network connection(s). In this manner, when the user uses different head-mounted display devices, the adjustment record corresponding to the user can be automatically accessed from the cloud storage to achieve adaptive adjustment.

The display unit 12 includes two sets of display modules 120. Each set of display module 120 includes a miniature display device 121 and an optical module 122 connected to the miniature display device 121.

In particular, the two sets of display modules 120 are used to provide respective display contents intended for both eyes of the user. Each miniature display device 121 may be movably connected to a corresponding optical module 122. Miniature display devices 121 of the two sets of display modules 120 can each generate an image which will be projected by the respective optical module 122 in a predetermined direction to the user's eyes, so that the user can see an enlarged virtual image of contents displayed on each miniature display device 121.

Retrieval unit 13 is configured to query in storage unit 11 for a corresponding adjustment record according to a query request, and retrieve adjustment parameters of the corresponding adjustment record.

Adjustment unit 14 is configured to generate a drive signal based on the retrieved adjustment parameters, and adjust based on the drive signal a distance between each miniature display device 121 and its corresponding optical module 122 and/or a distance between the two sets of display modules 120.

In particular, adjustment unit 14 may, based on the retrieved adjustment parameters of the corresponding adjustment record, change the distance between the two sets of display modules 120, thus enabling IPD adjustment. In addition, adjustment unit 14 may change the distance between each miniature display device 121 of the two sets of display modules 120 and its corresponding optical module 122, thereby achieving diopter adjustment of the two sets of display modules 120 respectively. In this embodiment an electric motor may be used to serve as a power source to facilitate a driving operation of adjustment unit 14. The motor's power drive principles are well known to those skilled in the art and therefore are not to be detailed herein.

According to the head-mounted display device 10 provided in the first embodiment of the disclosure, the desired adjustment parameters corresponding to diopter and/or IPD can be retrieved from an adjustment record to automatically adjust the distance between each miniature display device 121 and its corresponding optical module 122 and/or the distance between the two sets of display modules 120, enabling adaptive display adjustment of the head-mounted display device 10. Thus an intelligent adjustment mode is provided that can adapt to different users' visions.

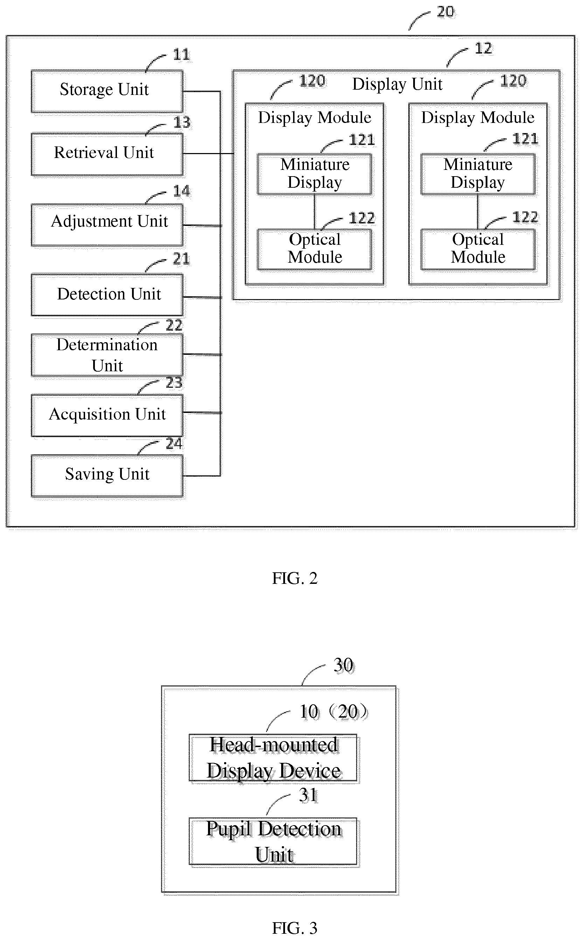

FIG. 2 is a block diagram illustrating a head-mounted display device in accordance with a second embodiment of the disclosure. Head-mounted display device 20 further includes, on basis of the head-mounted display device 10 of the first embodiment: a detection unit 21, a determination unit 22, an acquisition unit 23, and a saving unit 24.

The detection unit 21 is configured to detect a user characteristic and trigger an activating signal based on the detected user characteristic.

The determination unit 22 is configured to determine based on the activating signal whether there is a corresponding adjustment record in the storage unit 11, and if there is a corresponding adjustment record, trigger the query request; otherwise if there is no corresponding adjustment record, activate the acquisition unit 23.

In this embodiment, the adjustment record may further contain user characteristic information. The determination unit 22 may be configured to determine, based on the detected user characteristic, whether the storage unit 11 has stored user characteristic information that contains the detected user characteristic. The user characteristic information may include, but is not limited to: a user identifier (ID), and/or a voice recording, and/or a fingerprint recording, and/or a face recording, and/or an iris recording. Thus, after the user wears head-mounted display device 20, technical solutions of the present disclosure is not restricted to input or select user identifier such as a user name by the user to automatically retrieve the desired adjustment parameters in order to enable the adaptive adjustment, but a fingerprint recognition device, a face recognition device, or an iris recognition device, etc. can also be provided, to enable matching between the user and adjustment records, and retrieve the desired adjustment parameters for adaptive adjustment, without requiring the user to perform any operation.

The acquisition unit 23 is configured to acquire a new adjustment record.

In this embodiment, with the head-mounted display device worn, the user can manually adjust the distance between each miniature display device 121 and its corresponding optical module 122 and/or the distance between the two sets of display modules 120. When the optimal display effects are obtained through the adjustment, the acquisition unit 23 may convert the current distance between each miniature display device 121 and its corresponding optical module 122 and/or the current distance between the two sets of display modules 120 into adjustment parameters. In other embodiments, a sensor or the like can be provided to automatically recognize the user's diopter and/or interpupillary distance, which are then converted to adjustment parameters. The sensing and recognizing technology is well known to those skilled in the art and therefore is not to be detailed herein.

The saving unit 24 is configured to save the new adjustment record to the storage unit 11.

Based on the user's adjustment parameters that are acquired above, the user's adjustment record can be established-for example, the user's adjustment record may contain: a user name; a voice recording, and/or a fingerprint recording, and/or a face recording, and/or an iris recording; and adjustment parameters.

The head-mounted display device 20 provided in the second embodiment of the disclosure can further detect the user characteristic to automatically match the corresponding user record, so that the head-mounted display device can automatically match and adjust the diopter and IPD.

The head-mounted display device 30 provided in the third embodiment of the disclosure further includes, on basis of the above head-mounted display device 10 or 20: a pupil detection unit 31.

The pupil detection unit 31 is configured to detect the IPD of a user and generate the IPD adjustment parameter.

The adjustment unit 14 may be further configured to generate a drive signal based on the IPD adjustment parameter of the pupil detection unit 31, and adjust in accordance with the drive signal the distance between the two sets of display modules 120. In addition, the adjustment unit 14 may be configured to generate a drive signal based on the diopter adjustment parameter retrieved by the retrieval unit 13, and adjust in accordance with the drive signal the distance between each miniature display device 121 and its corresponding optical module 122.

The head-mounted display device 30 provided by the third embodiment of the disclosure further includes the pupil detection unit 31, which facilitates the automatic detection and adjustment of the IPD, providing a more intelligent adaptive display adjustment mode.

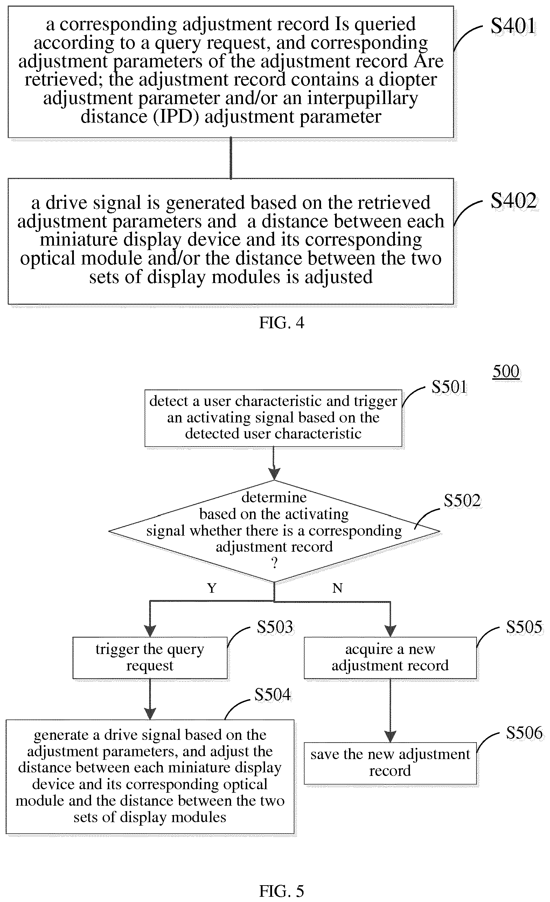

FIG. 4 is a flowchart illustration of a method for adaptive display adjustment in accordance with a fourth embodiment of the disclosure. The method is applicable to an electronic device that includes two sets of display modules, with each set of display module including a miniature display device and an optical module connected to the miniature display device. The electronic device may include, but is not limited to, a headset video player, a headset gaming device, a headset navigation device, or a headset medical display device, etc. Method 400 includes the following operations.

At S401, at least one adjustment record is queried to obtain a corresponding adjustment record according to a query request, and adjustment parameters of the corresponding adjustment record are retrieved. Each adjustment record may contain a diopter adjustment parameter(s) and/or an interpupillary distance (IPD) adjustment parameter(s).

At S402, a drive signal is generated based on the retrieved adjustment parameters, and a distance between each miniature display device and its corresponding optical module and/or a distance between the two sets of display modules is adjusted in accordance with the drive signal.

According to the method for adaptive display adjustment provided by the fourth embodiment of the disclosure, adjustment parameters corresponding to diopter and/or IPD can be obtained from an adjustment record to automatically adjust the distance between each miniature display device and its corresponding optical module and/or the distance between the two sets of display modules, enabling adaptive display adjustment. Thus an intelligent adjustment mode is provided that can adapt to different users' visions.

FIG. 5 is a flowchart illustrating a method for adaptive display adjustment provided in a fifth embodiment of the disclosure. Method 500 includes the following operations.

At S501, a user characteristic is detected and an activating signal is triggered based on the detected user characteristic.

In some exemplary embodiments, the user can be automatically recognized by a sensor-such as a voice recognition device, and/or a fingerprint recognition device, and/or a face recognition device, and/or an iris recognition device, etc.-it can serve as an automatic trigger to step S401 of the previous embodiment, such that an adjustment record corresponding to the user would be automatically retrieved without requiring the user to perform any operation.

The voice recognition device can gather through the microphone a voice uttered by the user. Accordingly, the adjustment records may contain a preset voice recording. The gathered voice may then be compared against the preset voice recordings to query for the adjustment record that contains the matching voice recording. In particular, the voice recording may be a voice recorded when the user establishes his/her own adjustment record, where the voice may contain any speech information such as a user name or nickname. The voice recordings may also be voices corresponding to different diopters and/or IPDs, such that the user may speak directly to the voice recognition device his/her desired diopter and/or IPD, and the voice recognition device can receive the speech containing the desired diopter and/or IPD and query for a voice recording that matches the speech. In this case, the adjustment record may contain a voice recording and adjustment parameters, and more particularly, the voice recording may include a diopter voice recording and/or an IPD voice recording.

The face recognition device may be implemented as a camera that takes a headshot of the user currently wearing the head-mounted display device. Accordingly, the face recording contained in the adjustment record may be a headshot or facial features the user stored in advance. By comparing against the face recordings contained in the adjustment records, the adjustment record corresponding to the face recording can be found.

At S502, determine whether there is a corresponding adjustment record based on the activating signal, and when there is a corresponding adjustment record, the method proceeds to S503, otherwise turns to S505.

In particular, the adjustment record may further contain user characteristic information. The user characteristic information may include, but is not limited to: a user identifier (ID), and/or a voice recording, and/or a fingerprint recording, and/or a face recording, and/or an iris recording. The activating signal may include the user characteristic that is detected at S501. Accordingly, step S502 specifically includes determining, according to the user characteristic detected at S501, whether there is user characteristic information that contains the user characteristic detected at S501.

At S503, a query request is triggered.

Based on the query request, a corresponding adjustment record is queried for, and adjustment parameters of the corresponding adjustment record are retrieved. The adjustment record may include one or more adjustment parameters corresponding to diopter and IPD.

At S504, a drive signal is generated based on the retrieved adjustment parameters, and a distance between each miniature display device and its corresponding optical module and a distance between the two sets of display modules are adjusted in accordance with the drive signal.

At S505, a new adjustment record is acquired.

In particular, the current distance between each miniature display device and its corresponding optical module together with the current distance between the two sets of display modules may be acquired and then converted to adjustment parameters.

At S506, the new adjustment record is saved.

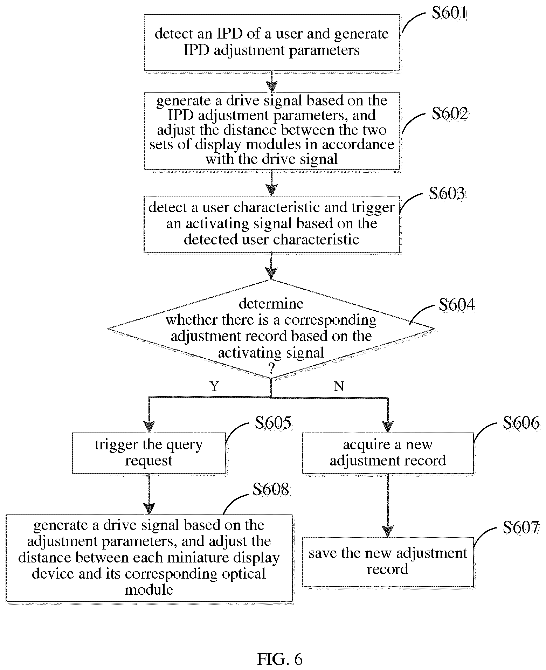

FIG. 6 is a flowchart illustrating a method for adaptive display adjustment provided in a sixth embodiment of the disclosure. Method 600 includes the following operations.

At S601, the interpupillary distance (IPD) of a user is detected and an IPD adjustment parameter is generated.

At S602, a drive signal is generated based on the IPD adjustment parameter and the distance between the two sets of display modules is adjusted in accordance with the drive signal.

At S603, a user characteristic is detected and an activating signal is triggered based on the detected user characteristic.

At S604, determine whether there is a corresponding adjustment record based on the activating signal.

In particular, the adjustment record may further contain user characteristic information. The user characteristic information may include, but is not limited to: a user identifier (ID), and/or a voice recording, and/or a fingerprint recording, and/or a face recording, and/or an iris recording. Accordingly, step S604 specifically includes determining whether there is user characteristic information that contains the user characteristic detected at S603, and querying the required adjustment record if there is user characteristic information that contains the detected user characteristic.

At S605, a query request is triggered.

In this embodiment, the query request is a diopter query request directed to the required adjustment record that is determined in S604. The query request is used to query for the required adjustment record and retrieve the diopter adjustment parameters corresponding to the required adjustment record.

At S606, a new adjustment record is acquired.

The current distance between each miniature display device and its corresponding optical module may be acquired and then converted to adjustment parameters.

At S607, the new adjustment record is saved.

At S608, a drive signal is generated based on the adjustment parameters, and a distance between each miniature display device and its corresponding optical module is adjusted according to the drive signal.

The method for adaptive display adjustment provided by the disclosure will not be limited to the above order in which the various steps are performed. Those of ordinary skill in the art, equipped with the principles of the above embodiments, will appreciate that the method may also be performed in the following orders: S501; S502; when the determination at S502 is YES, S503 and S504 are performed; otherwise when the determination at S502 is NO, steps S601, S602, S606, S608 are performed, where S608 may be executed synchronously with S607 or they can be performed separately.

Since the methods disclosed by the fourth through sixth embodiments correspond to the associated features of the head-mounted display devices previously described, the principles of the first through third embodiments can be referred to for the specific principles of these methods, which therefore are not to be detailed herein.

The foregoing description merely depicts some exemplary embodiments of the disclosure, which however are not intended to limit the disclosure. Any modifications, equivalent substitutions, or improvements made without departing from the spirits and principles of the disclosure shall all be encompassed within the protection of the disclosure.

## Claims

1. A head-mounted display device, comprising:
a storage unit, configured to store at least one adjustment record, each adjustment record containing at least one of a diopter adjustment parameter and an interpupillary distance (IPD) adjustment parameter;
a display unit, comprising two sets of display modules, with each set of display module comprising a miniature display device and an optical module connected to the miniature display device;
a retrieval unit, configured to query the storage unit for a corresponding adjustment record according to a query request, and retrieve adjustment parameters of the corresponding adjustment record; and
an adjustment unit, configured to generate a drive signal based on the retrieved adjustment parameters, and adjust in accordance with the drive signal at least one of a distance between each miniature display device and its corresponding optical module and a distance between the two sets of display modules.

2. The head-mounted display device of claim 1, further comprising:
a determination unit, configured to determine based on an activating signal whether there is the corresponding adjustment record in the storage unit, and trigger the query request if there is the corresponding adjustment record.

3. The head-mounted display device of claim 2, further comprising an acquisition unit, configured to acquire a new adjustment record;
wherein the determination unit is further configured to activate the acquisition unit when determining there is no corresponding adjustment record in the storage unit.

4. The head-mounted display device of claim 2 or 3, wherein the corresponding adjustment record further comprises user characteristic information, and the head-mounted display device further comprises:
a detection unit, configured to detect a user characteristic and trigger the activating signal based on the detected user characteristic;
wherein the determination unit is further configured to determine whether the storage unit has user characteristic information that contains the detected user characteristic.

5. The head-mounted display device of claim 4, wherein the user characteristic information comprises at least one selected from a group consisting of: a user identifier, a voice recording, a fingerprint recording, a face recording, and an iris recording.

6. The head-mounted display device of claim 3, wherein acquiring by the acquisition unit the new adjustment record comprises: acquiring at least one of a current distance between each miniature display device and its corresponding optical module and a current distance between the two sets of display modules, and converting the distance to adjustment parameters.

7. The head-mounted display device of claim 6, further comprising:
a saving unit, configured to save the new adjustment record to the storage unit.

8. The head-mounted display device of claim 1, further comprising:
a pupil detection unit, configured to detect an IPD of a user and generate the IPD adjustment parameter;
wherein the adjustment unit is configured to generate the drive signal based on the IPD adjustment parameter of the pupil detection unit, and adjust the distance between the two sets of display modules in accordance with the drive signal.

9. The head-mounted display device of claim 8, wherein the adjustment unit is further configured to generate the drive signal based on the diopter adjustment parameter retrieved by the retrieval unit, and adjust the distance between each miniature display device and its corresponding optical module in accordance with the drive signal.

10. A method for adaptive display adjustment that is applicable to an electronic device comprising two sets of display modules, with each set of display module comprising a miniature display device and an optical module connected to the miniature display device, the method comprising:
querying for a corresponding adjustment record according to a query request, and retrieving corresponding adjustment parameters of the adjustment record, wherein the adjustment record contains at least one of a diopter adjustment parameter and an interpupillary distance (IPD) adjustment parameter; and
generating a drive signal based on the retrieved adjustment parameters, and adjusting in accordance with the drive signal at least one of a distance between each miniature display device and its corresponding optical module and a distance between the two sets of display modules.

11. The method of claim 10, further comprising the follows prior to querying for the corresponding adjustment record according to the query request: determining whether there is a corresponding adjustment record based on an activating signal, and triggering the query request if there is the corresponding adjustment record.

12. The method of claim 11, further comprising acquiring a new adjustment record when determining there is no corresponding adjustment record.

13. The method of claim 11 or 12, wherein the adjustment record further comprises user characteristic information, and the method further comprises:
detecting a user characteristic and triggering the activating signal based on the detected user characteristic; and
determining whether there is user characteristic information that contains the detected user characteristic in accordance with the user characteristic.

14. The method of claim 13, wherein the user characteristic information comprises at least one selected from a group consisting of: a user identifier, a voice recording, a fingerprint recording, a face recording, and an iris recording.

15. The method of claim 12, wherein acquiring the new adjustment record comprises:
acquiring at least one of a current distance between each miniature display device and its corresponding optical module and a current distance between the two sets of display modules, and converting the distance to adjustment parameters.

16. The method of claim 15, further comprising: saving the new adjustment record.

17. The method of claim 10, further comprising:
querying for a corresponding adjustment record of a corresponding diopter according to a query request, and retrieving adjustment parameters corresponding to the corresponding adjustment record; and
generating a drive signal based on the retrieved adjustment parameters, and adjusting in accordance with the drive signal the distance between each miniature display device and its corresponding optical module.

18. The method of claim 17, further comprising the follows prior to querying for the corresponding adjustment record according to the query request:
detecting an IPD of a user and generating the IPD adjustment parameter; and
generating a drive signal based on the IPD adjustment parameter and adjusting the distance between the two sets of display modules in accordance with the drive signal.
